# EUROPÄISCHE PATENTSCHRIFT

(11) **EP 1 535 856 B1**
(45) Veröffentlichungstag und Bekanntmachung des Hinweises auf die Patenterteilung: **03.06.2009**
(21) Anmeldenummer: 04021076.7
(22) Anmeldetag: 04.09.2004
(51) Int. Cl.: B65D 47/14

(54) **Kunststofftube sowie Verfahren zur Herstellung einer solchen Tube**
Plastic tube and method for producing such
Tube en plastique et procédé pour sa fabrication

(30) Priorität: 18.11.2003 DE 10353912
(43) Veröffentlichungstag der Anmeldung: 01.06.2005
(73) Patentinhaber: Linhardt Metallwarenfabrik GmbH & Co. KG, 94234 Viechtach (DE)
(72) Erfinder: Soder, Horst, 76707 Hambrücken (DE); Misch, Ludwig, 76707 Hambrücken (DE)
(74) Vertreter: Graf, Helmut

(56) Entgegenhaltungen:
- EP-A2- 0 130 239
- GB-A- 2 196 948
- US-A- 3 199 751
- US-A- 4 132 331
- US-A- 4 386 714
- US-A- 4 397 400
- US-A- 4 448 829
- US-A- 5 690 764
- US-A- 5 863 655
- US-B1- 6 247 616

## Beschreibung

Die Erfindung bezieht sich auf eine Kunststofftube gemäß Oberbegriff Patentanspruch 1. Weiterhin bezieht sich die Erfindung auf ein Verfahren zum Herstellen einer Kunststofftube gemäß Oberbegriff Patentanspruch 6.

Kunststofftuben für ein z.B. pastöses und/oder gelartiges Verpackungsgut sind in verschiedenen Ausführungen bekannt. Bekannt sind insbesondere auch derartige Tuben mit einem unverlierbaren Klappdeckel zum Wiederverschließen der Abgabeöffnung auszugestalten. Bekannte Kunststofftuben dieser Art werden in der Weise gefertigt, dass an einem Ende einer den Tubenkörper bildenden Länge eines Tubenschlauchs ein als Formteil aus Kunststoff gefertigtes Tubenschulterstück eingesetzt und mit dem Tubenschlauch durch Verschweißen verbunden wird. Das Tubenschulterstück bildet dann die sich kegelförmig verjüngende Schulter und einen die Tubenöffnung aufweisenden Nippel. In einem weiteren Arbeitsgang wird der eigentliche Verschluss auf dem Nippel montiert.

Bekannt ist dabei insbesondere auch (US 4 386 714), bei einer Tube, deren Tubenkörper einstückig mit einer Tubenschulter mit Nippel und Tubenöffnung gefertigt ist, Verschlusselement vorzusehen (US 4 386 714), welches im Wesentlichen aus einem auf dem Tubennippel befestigten Verschlusskörper und einem einstückig mit dem Verschlusskörper gefertigten und über ein Filmscharnier mit dem Verschlusskörper verbundenen klappbaren Verschlussdeckel besteht, der im geöffneten Zustand eine mit der Tubenöffnung des Nippels deckungsgleich angeordnete Öffnung im Verschlusskörper freigibt und im geschlossenen Zustand diese Öffnung verschließt.

In ähnlicher Weise besteht bei einer Tube mit Klappdeckel der Verschluss aus einer Verschlusskappe, die z.B. durch Einrasten auf dem Nippel des Tubenschulterstücks so befestigt wird, dass eine Öffnung im Boden der Verschlusskappe deckungsgleich mit der Tubenöffnung des Nippels liegt. Die Öffnung in der Verschlusskappe ist dann durch einen an dieser Verschlusskappe angeformten, schwenkbaren Klappdeckel verschließbar. Konstruktiv sind diese bekannten Kunststofftuben mit Klappverschluss bzw. Klappdeckel aufwendig.

Bekannt sind weiterhin tubenartige Behälter, bei denen wiederum die Tubenschulter mit dem die Tubenöffnung bildenden Tubennippel einstückig mit dem Tubenkörper hergestellt ist und bei denen ein Verschlussdeckel über einen flexiblen, bandartigen, aus Kunststoff gefertigten Halteabschnitt unverlierbar mit der Tube im Bereich des Tubennippels verbunden ist.

Aufgabe der Erfindung ist es, eine Kunststofftube mit Klappdeckel aufzuzeigen, die besonders einfach und preiswert gefertigt werden kann. Zur Lösung dieser Aufgabe ist eine Tube entsprechend dem Patentanspruch 1 ausgebildet. Ein Verfahren zur Herstellung einer solchen Tube ist Gegenstand des Patentanspruches 6.

Bei der erfindungsgemäßen Tube bildet dasjenige Teil des Verschlusselementes, an dem der Klappdeckel unmittelbar angelenkt ist, zugleich den Verschlusskörper und ist mit dem den Tubenkörper bildenden Tubenschlauch permanent verbunden. Ein zusätzliches Formteil oder Tubenschulterstück mit einem eine Tubenöffnung umgebenden Nippel ist nicht erforderlich. Der bei der Herstellung bekannter Tuben mit Klappdeckel notwendige Verfahrensschritt zum Verbinden der Verschlußkappe mit Klappdeckel mit dem Tubennippel entfällt.

Weiterbildungen der Erfindung sind Gegenstand der Unteransprüche. Die Erfindung wird im Folgenden anhand der Figuren an einem Ausführungsbeispiel näher erläutert.
Es zeigen:
- Fig. 1: in Teildarstellung und im Schnitt eine Tube gemäß der Erfindung;
- Fig. 2 und 3: in Einzeldarstellung und im Schnitt sowie in Draufsicht ein Verschlußelement der Tube der Figur 1;
- Fig. 4: in den Positionen a - c verschiedene Schritte des erfindungsgemäßen Verfahrens zum Herstellen der Tube der Figur 1.

In den Figuren ist 1 eine Tubenverpackung oder Tube zur Aufnahme eines beispielsweise pastösen und/oder cremeartigen und/oder gelartigen Verpackungsguts. Die Tube 1 besteht im wesentlichen aus dem Tubenkörper 2 mit der von einer Länge eines z.B. laminierten Tubenschlauches 3.1 gebildeten Wandung 3 sowie aus einem Verschlußelement 4, welches an einem Ende des Tubenkörpers 2 vorgesehen ist und dort den Innenraum dieses Tubenkörpers begrenzt. Bis zum Füllen der Tube 1 mit dem Verpackungsgut ist das dem Verschlußelement 4 gegenüberliegende Ende des Tubenkörpers 2 offen und der Tubenkörper 2 bzw. dessen Wandung 3 besitzen eine Kreiszylinderform. Nach dem Füllen der Tube 1 wird das im Verschlußelement 4 gegenüberliegende Ende des Tubenkörpers 2 in der üblichen Weise verschlossen, beispielsweise durch Verschweißen.

Der die Wandung 3 bildende Tubenschlauch ist bei der dargestellten Ausführungsform aus einem streifen- oder bandartigen Kunststoff-Laminat durch Formen des Laminats in den Schlauch und durch Verschweißen der sich nach dem Formen überlappenden oder benachbarten Längsseiten des Laminats hergestellt. Zumindest an der Innenseite des Tubenkörpers 2 ist dieses Laminat von einer Schicht aus einem mit den üblichen Techniken verschweißbaren thermoplastischen Polymers gebildet.

Das Verschlußelement 4 ist bei der dargestellten Ausführungsform ein Zweikomponenten-Spritzgießteil und besteht aus einem kappenartigen Formteil Verschlußkörper 5 und aus einem Verschlußdeckel 6, welcher schwenkbar mit dem Verschlußkörper 5 verbunden ist.

Der kappenartige Verschlußkörper 5 ist durch Verschweißen mit dem oberen Ende des Tubenkörpers 2 dicht verbunden und übernimmt bei der Tube 1 die Funktion des Tubenschulterstücks bekannter Tuben insofern, als der Verschlußkörper 5 den Tubeninnenraum an dem betreffenden Ende des Tubenkörpers 2 abschließt.

Der Verschlußkörper 5 besitzt einen Boden 5.1, der sich im wesentlichen senkrecht zur Tubenachse TA erstreckt und der achsgleich mit dieser Achse bzw. mit der Achse des Verschlußkörpers 5 eine mittige Öffnung 7 aufweist, die die Tuben- oder Abgabeöffnung bildet. Der Boden 5.1 ist im Bereich der Öffnung 7 so geformt, daß er dort an der dem Tubenkörper 2 abgewandten Außenseite eine Vertiefung 8 bildet, an deren Boden sich die Tubenöffnung 7 befindet.

Der Boden 5.1 ist weiterhin mit einer an der Bodenaußenseite offenen und die Vertiefung 8 konzentrisch mit radialem Abstand umschließenden ringartigen Vertiefung 9 sowie mit einer Vertiefung 10 ausgebildet, die radial zur Achse des Verschlußkörpers 5 verläuft, in die Vertiefung 9 mündet und an den Rand des Bodens 5.1 reicht. Die Vertiefungen 9 und 10 sind vollständig und bündig mit einem Kunststoff ausgefüllt, welcher einen einstückig mit dem Deckel 6 hergestellten Halteabschnitt 11 bildet, über den der Deckel 6 am Verschlußkörpers 5 klappbar gehalten ist. Hierfür ist am Übergang zwischen dem Halteabschnitt 11 und dem Deckel 6, d.h. im Bereich des Randes des Bodens 5.1 durch einen Materialabschnitt verminderter Dicke ein Gelenk oder Filmscharnier 12 zwischen dem Deckel 6 und dem Halteabschnitt 11 gebildet, und zwar mit einer Gelenk- oder Schwenkachse, die tangential zum Umfang des Bodens 5.1 und in der Ebene dieses Bodens liegt.

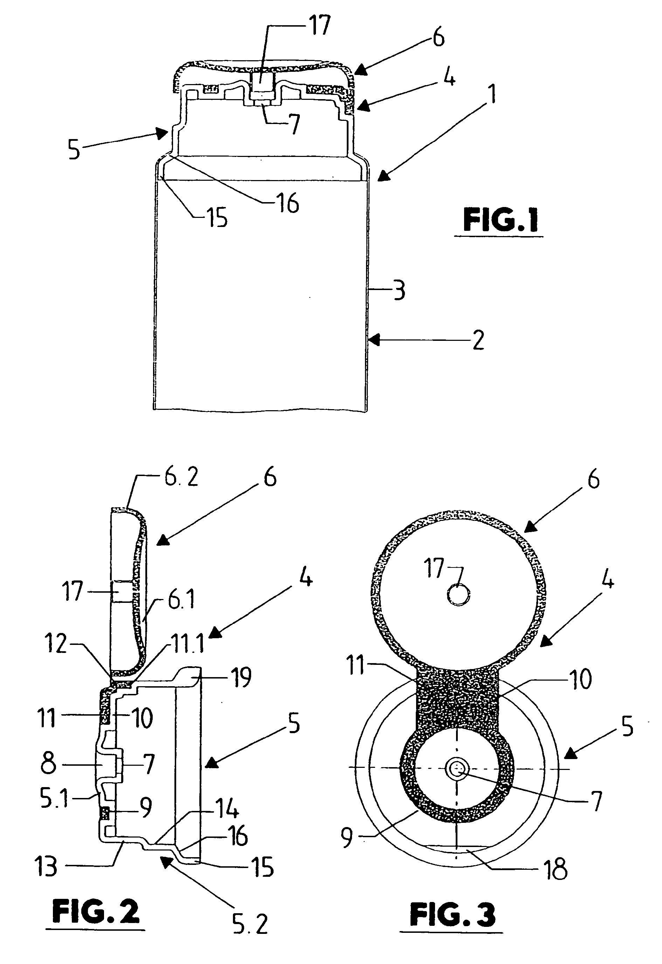

Wie speziell die Figur 2 zeigt, ist die Vertiefung 10 am Rand des Deckels 5 so geformt, daß der von dem die Vertiefung 10 ausfüllenden Kunststoff gebildete Halteabschnitt 11 am Rand des Bodens 5.1 eine Abwinklung bzw. einen sich in Richtung der Tubenachse TA erstreckenden Fortsatz 11.1 bildet, der sich an einer parallel zur Tubenachse TA verlaufenden Fläche der Vertiefung 10 sowie an seinem freien Ende auch an einer in einer Ebene senkrecht zur Tubenachse TA angeordneten Stufe am Verschlußkörper 5 abstützt. Hierdurch ist eine zusätzliche Kräfte aufnehmende mechanische Verbindung zwischen dem Halteabschnitt 11 und dem Verschlußkörper 5 erreicht.

Der Verschlußkörpers 5 besitzt weiterhin eine Umfangswand 5.2, die im wesentlichen rotationssymmetrisch zur Tubenachse TA ausgebildet ist und sich aus mehreren, axial aneinander anschließenden, im wesentlichen ringförmigen Abschnitten zusammensetzt, und zwar aus dem in den Boden 5.1 übergehenden Abschnitt 13 mit dem kleineren Durchmesser, aus dem sich an den Abschnitt 13 anschließenden Abschnitt 14 mit dem etwas größeren Durchmesser und aus dem sich an den Abschnitt 14 anschließenden Abschnitt 15 mit dem größten Durchmesser. Zwischen den Abschnitten bildet die Umfangswand 5.2 jeweils eine Stufe oder einen Bund, so beispielsweise den im wesentlichen kegelringförmigen Bund 16 zwischen den Abschnitten 14 und 15.

Der Deckel 6 ist tellerartig ausgebildet, und zwar mit einem an der Außenseite konkav gewölbten Boden 6.1 und mit einem Rand 6.2, an dem der Deckel 6 über das Filmscharnier 12 mit dem Halteabschnitt 11 verbunden. In der Mitte ist am Boden 6.1 ein Verschlußzapfen 17 angeformt, der bei der dargestellten Ausführungsform als Hohlzapfen ausgeführt ist und in der Verschlußstellung des Deckels 6, d.h. bei auf die Außenfläche des Bodens 6.1 geklapptem Deckel 6 in die Vertiefung 8 eingreift und dadurch die Tubenöffnung 7 dicht verschließt.

Im fertig produzierten Zustand der Tube 1 übergreift die Wandung 3 des Tubenkörpers 2 den Abschnitt 15 und den Bund 16 und ist dort mit dem Verschlußkörpers 5 verschweißt. Der Verschlußkörpers 5 besteht hierfür aus einem für dieses Verschweißen geeigneten Kunststoff, beispielsweise aus einem thermoplastischen Kunststoff, der zusätzlich auch die erforderliche Steifigkeit für den Verschlußkörper 5 sicherstellt, um insbesondere auch das Öffnen und Schließen des Deckels 6 in bequemer Weise zu ermöglichen. Der Deckel 6 mit dem angeformten Halteabschnitt 11 besteht aus einem Kunststoffmaterial, welches insbesondere auch bei einem häufigen Öffnen und Schließen des Deckels eine lange Lebensdauer für das Filmscharnier 12 gewährleistet.

Um das Öffnen des geschlossenen Deckels 6 zu erleichtern, ist an der Außenfläche des Bodens 5.1 und im Bereich des Randes dieses Bodens sowie dem Filmscharnier 12 gegenüberliegend eine Vertiefung 18 eingeformt. Weiterhin ist an der Innenfläche der Umfangswand 5.2 im Bereich des Abschnittes 15 ein radial von dieser Innenfläche wegstehender Richtsteg 19 angeformt.

Das Verschlußelement 4 mit dem Verschlußkörper 5 und den Deckel 6 ist in einem Zweikomponenten-Spritzgießverfahren hergestellt, wobei das polymeren Material bzw. der Kunststoff für das Formteil 5 und das polymeren Material bzw. der Kunststoff für den Deckel 6 den jeweiligen speziellen Erfordernissen entsprechend unterschiedlich gewählt sind, allerdings derart, daß die notwendige Verbindung zwischen diesen beiden Teilen des Verschlußelementes 4 erreicht ist.

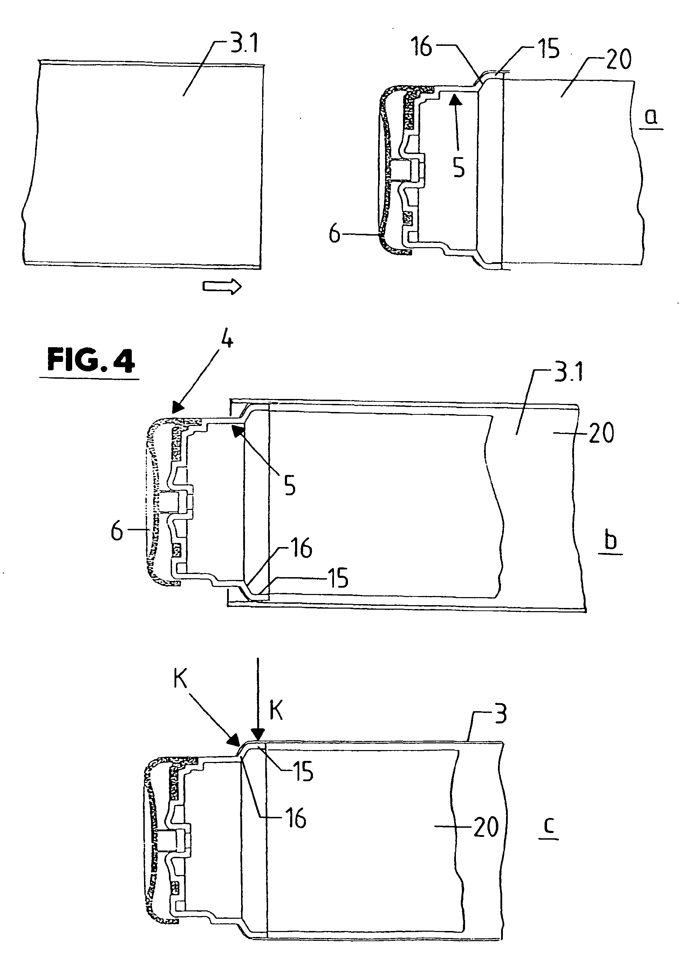

Die Figur 4 zeigt in den Positionen a - c die Herstellung der Tube 1. Hierbei wird an einer Montageposition zunächst ein Verschlußelement 4 mit auf den Boden 5.1 geklapptem Deckel 6 bereitgestellt. Das Verschlußelement 4 ist hierbei mit der Öffnung des kappenartigen Verschlußkörpers 5 auf die an der Stirnseite eines Montagedorns 20 gebildete Aufnahme aufgesetzt, und zwar derart, daß der Richtsteg 19 gegen einen an dieser Aufnahme gebildeten Anschlag anliegt, so daß das Verschlußelement 4 sich in einer vorgegebenen Lage und Orientierung am Montagedorn 20 befindet (Position a der Figur 4).

Im Anschluß daran wird der den Tubenkörper 2 bzw. dessen Wandung 3 bildende Tubenschlauch 3.1 zugeführt und eine vorgegebene Länge dieses Schlauches über das auf dem Montagedorn 20 gehaltenen Verschlußelement 4 gezogen, so daß das hierbei nacheilende Ende den Verschlußkörper 5 im Bereich des Abschnittes 15 und des Bundes 16 umschließt (Position b der Figur 4).

In einem weiteren Verfahrensschritt wird dann der Tubenschlauch 3.1 mit geeigneten Mitteln gegen die Außenfläche des Abschnittes 15 und des Bundes 16 angedrückt und hierbei mit dem Verschlußkörper 5 verschweißt, wie dies in der Position c der Figur 4 mit den Pfeilen K angedeutet ist.

Ist der die Wandung 3 bildende Tubenschlauch 3.1 bereits bedruckt, so ist es bei dem beschriebenen Verfahren problemlos möglich, diesen Tubenschlauch 3.1 so ausgerichtet mit dem Verschlußelement 4 zusammenzuführen und zu verbinden, daß bestimmte Elemente des Aufdrucks auf einer Linie beispielsweise mit der die Vorderseite der fertigen Tube 1 definierenden Griffvertiefung 18 liegen. Durch den Richtsteg 19 und den zugehörigen Anschlag an dem Montagedorn 20 weist jedes Verschlußelement 4 eine vorgegebene Positionierung am Dorn 20 auf. Das Ausrichten des Tubenschlauches erfolgt beispielsweise durch eine Bilderkennung mit entsprechender Steuerung.

Die Erfindung wurde voranstehend an einem Ausführungsbeispiel beschrieben. Es versteht sich, daß zahlreiche Änderungen sowie Abwandlungen im Rahmen der Erfindung möglich sind, wie in den Patentansprüchen definiert ist. So ist es beispielsweise auch möglich den Verschlußkörper 5 und den Deckel 6 mit dem Halteabschnitt 11 jeweils gesondert herzustellen und anschließend miteinander zu verbinden, allerdings bevor das aus diesen beiden Teilen bestehende Verschlußelement zu einer Tube 1 weiterverarbeitet wird.

Weiterhin können selbstverständlich anstelle des Richtsteges 19 auch andere Mittel für ein ausgerichtetes Positionieren des jeweiligen Verschlußkörpers 5 an einer Montageposition oder an einem dortigen Halter vorgesehen sein.

### Bezugszeichenliste

- 1: Tube
- 2: Tubenkörper
- 3: Wandung des Tubenkörpers
- 3.1: Tubenschlauch
- 4: Verschlußelement
- 5: Verschlußkörper
- 5.1: Boden
- 5.2: Umfangswand
- 6: Deckel
- 6.1: Deckel boden
- 6.2: Deckel rand
- 7: Tuben- oder Abgabeöffnung
- 8: Vertiefung
- 9, 10: Vertiefung
- 11: Halteabschnitt
- 11.1: winkelförmige Verlängerung des Halteabschnitts
- 12: Folienscharnier
- 13, 14, 15: Abschnitt der Umfangswand 5.2
- 16: Schulter oder Bund
- 17: Verschlußzapfen
- 18: Griffvertiefung
- 19: Richtsteg
- 20: Montagedorn
- K: Anpreß- und Schweißkraft
- TA: Tubenachse

## Patentansprüche

1. Kunststofftube mit einem Tubenkörper (2), mit einer den Tubenkörper (2) an einem Ende abschließenden Tubenschulter mit einer Abgabe- oder Tubenöffnung (7) sowie mit einem an der Tubenschulter über einen dort befestigten Halteabschnitt (11) angelenkten Verschlussdeckel (6), der im geschlossenen Zustand die Tuben- oder Abgabeöffnung (7) verschließt, **dadurch gekennzeichnet, dass** der Tubenkörper aus einer Länge eines Tubenschlauchs (3.1) besteht, dass die Tubenschulter von einem in ein Ende dieser Tubenschlauchlänge eingesetzten und dort mit dem Tubenschlauch (3.1) permanent verbundenen kappenartigen Verschlusskörper (5) gebildet ist, und
dass der Halteabschnitt (11) am Verschlussdeckel (6) angeformt zur Verbindung mit dem Verschlusskörper (5) in wenigstens einer an einem Boden (5.1) des kappenartigen Verschlusskörpers (5) vorgesehenen Vertiefung (9, 10) bündig aufgenommen ist.

2. Tube nach Anspruch 1, **dadurch gekennzeichnet, dass** der Halteabschnitt (11) mit einem ringartigen Teilabschnitt die von einer Öffnung im Boden des kappenarten Verschlusskörpers (5) gebildete Tubenöffnung (7) mit Abstand umschließt.

3. Tube nach Anspruch 1, **dadurch gekennzeichnet, dass** der Verschlusskörper (5) und der Verschlussdeckel (6) Bestandteile eines in einem Zweikomponenten-Spritzgießverfahren hergestellten Verschlusselementes (4) sind, und dass der Verschlusskörper (5) und der Verschlussdeckel (6) aus unterschiedlichem Kunststoff bestehen.

4. Tube nach einem der vorhergehenden Ansprüche, **dadurch gekennzeichnet, dass** der Verschlusskörper (5) und der Halteabschnitt des Verschlussdeckels (6) durch formschlüssiges Ineinandergreifen, beispielsweise Verknüpfen miteinander verbunden sind.

5. Tube nach einem der vorhergehenden Ansprüche, **dadurch gekennzeichnet, dass** zwischen dem Verschlussdeckel (6) und dem Halteabschnitt (11) ein Folienscharnier (12) gebildet ist.

6. Verfahren zum Herstellen einer Kunststofftube mit einem Tubenkörper (2), mit einer den Tubenkörper (2) an einem Ende abschließenden Tubenschulter mit einer Abgabe- oder Tubenöffnung (7) sowie mit einem an der Tubenschulter über einen dort befestigten Halteabschnitt (11) angelenkten Verschlussdeckel (6), der im geschlossenen Zustand die Tuben- oder Abgabeöffnung (7) verschließt" **gekennzeichnet**
**durch** das Bereitstellen eines Verschlusselementen (4) bestehend aus dem Verschlusskörper (5) und dem an diesem angelenktem Verschlussdeckel (6),
**durch** das Bereitstellen einer den Tubenkörper (2) bildende Länge eines Tubenschlauchs (3.1) sowie durch das Zusammenführen und Verbinden des Verschlusskörper (5) mit der Länge des Tubenschlauches (3.1).

7. Verfahren nach Anspruch 6, **gekennzeichnet durch** die Verwendung von Verschlusselementen (4), welche mit ihrem Verschlusskörper (5) und Verschlussdeckel (6) jeweils in einem Zweikomponentenkunststoff-Spritzgießverfahren hergestellt sind, und zwar mit dem Verschlusskörper (5) und dem Verschlussdeckel (6) aus unterschiedlichem Kunststoff.

8. Verfahren nach Anspruch 6 oder 7, **dadurch gekennzeichnet, dass** der Tubenschlauch (3.1) über den auf einem Halter (20) positionierten Verschlusskörper (5) der Verschlusselementen (4) gezogen oder geschoben wird, und dass anschließend das Verbinden des Tubenschlauches (3.1) mit dem Verschlusskörper (5) erfolgt.

## Claims

1. Plastic tube having a tube body (2), with a tube shoulder closing the tube body (2) at one end with a dispenser- or tube opening (7) as well as with a cap (6) hinged on the tube shoulder by a retaining portion (11), which in the closed state closes the tube- or dispenser opening (7), **characterised in that** the tube body consists of a length of a tubular hose (3.1),
**in that** the tube shoulder is formed by a closure body (5) in the form of a cap inserted in one end of this tubular hose length and permanently joined there to the tubular hose (3.1) and
**in that** the retaining portion (11) is held flush on the cap (6) moulded on for attachment to the closure body (5) in at least one recess (9, 10) provided on a base (5.1) of the closure body (5) in the form of a cap.

2. Tube according to claim 1, **characterised in that** the retaining portion (11), having an annular section, at a distance encloses the tube opening (7) formed by an opening in the base of the closure body (5) in the form of a cap.

3. Tube according to claim 1, **characterised in that** the closure body (5) and the cap (6) are components of a closure element (4) produced in a two-component injection moulding process, and **in that** the closure body (5) and the cap (6) are made of different plastic.

4. Tube according to anyone of the above claims, **characterised in that** the closure body (5) and the retaining portion of the cap (6) are connected to one another by positive engagement, linking for example.

5. Tube according to anyone of the above claims, **characterised in that** a film hinge (12) is formed between the cap (6) and the retaining portion (11).

6. Process for producing a plastic tube having a tube body (2), with a tube shoulder closing the tube body (2) at one end with a dispenser- or tube opening (7) as well as with a cap (6) hinged on the tube shoulder by a retaining portion (11), which in the closed state closes the tube- or dispenser opening (7),
**characterised by** the provision of a closure element (4) comprised of the closure body (5) and the cap (6) hinged thereon,
by the provision of a length of a tubular hose (3.1) forming the tube body (2) as well as by the bringing together and connecting of the closure body (5) to the length of the tubular hose (3.1).

7. Process according to claim 6, **characterised by** the use of closure elements (4), which with their closure body (5) and cap (6) are each produced in a two-component plastic injection moulding process, and to be precise with the closure body (5) and the cap (6) made of different plastic.

8. Process according to claim 6 or 7, **characterised in that** the tubular hose (3.1) is pulled or pushed over the closure body (5), positioned on a support (20), of the closure elements (4), and **in that** subsequently the tubular hose (3.1) is attached to the closure body (5).

## Revendications

1. Tube en matériau synthétique avec un corps de tube (2) comprenant un épaulement de tube terminant le corps de tube (2) à une extrémité avec une ouverture de distribution ou de tube (7) ainsi qu'un couvercle de fermeture (6) articulé sur l'épaulement de tube via une section d'arrêt qui y est fixée, couvercle qui, à l'état fermé, ferme l'ouverture de tube ou de distribution (7),
**caractérisé en ce que**
le corps de tube est constitué d'une longueur d'un tuyau souple (3.1),
l'épaulement de tube est formé d'un corps de fermeture (5) de type capuchon qui est inséré dans une extrémité de cette longueur de tuyau souple (3.1) et y est raccordé de manière permanente, et
la section d'arrêt (11) formée sur le couvercle de fermeture (6) pour se raccorder au corps de fermeture (5) est reçue à fleur dans au moins un évidement (9, 10) prévu sur un fond (5.1) du corps de fermeture (5) de type capuchon.

2. Tube selon la revendication 1, **caractérisé en ce que** la section d'arrêt (11) entoure à distance par une section partielle de type anneau l'ouverture de tube (7) formée d'une ouverture dans le fond du corps de fermeture (5) de type capuchon.

3. Tube selon la revendication 1, **caractérisé en ce que** le corps de fermeture (5) et le couvercle de fermeture (6) sont des composants d'un élément de fermeture (4) fabriqué par un procédé de moulage par injection à deux composants et le corps de fermeture (5) et le couvercle de fermeture (6) sont constitués de matériaux synthétiques différents.

4. Tube selon l'une quelconque des revendications précédentes, **caractérisé en ce que** le corps de fermeture (5) et la section d'arrêt du couvercle de fermeture (6) sont raccordés l'un à l'autre par engagement mutuel mécanique, par exemple par liaison.

5. Tube selon l'une quelconque des revendications précédentes, **caractérisé en ce qu'**une charnière en feuille (12) est formée entre le couvercle de fermeture (6) et la section d'arrêt (11).

6. Procédé pour fabriquer un tube en matériau synthétique avec un corps de tube (2) comprenant un épaulement de tube terminant le corps de tube (2) à une extrémité avec une ouverture de distribution ou de tube (7) ainsi qu'un couvercle de fermeture (6) articulé sur l'épaulement de tube via une section d'arrêt qui y est fixée, couvercle qui, à l'état fermé, ferme l'ouverture de tube ou de distribution (7), **caractérisé par**
la préparation d'un élément de fermeture (4) constitué du corps de fermeture (5) et du couvercle de fermeture (6) articulé sur celui-ci, la préparation d'une longueur d'un tuyau souple (3.1) formant le corps de tube (2), et
la réunion et le raccordement du corps de fermeture (5) avec la longueur du tuyau souple (3.1).

7. Procédé selon la revendication 6, **caractérisé par** l'utilisation d'éléments de fermeture (4), qui sont fabriqués avec leur corps de fermeture (5) et leur couvercle de fermeture (6), respectivement, dans un procédé de moulage par injection de matériau synthétique à deux composants et ce, alors que le corps de fermeture (5) et le couvercle de fermeture (6) sont en matériaux synthétiques différents.

8. Procédé selon la revendication 6 ou 7, **caractérisé en ce que** le tuyau tubulaire souple (3.1) est tiré ou poussé via le corps de fermeture (5) des éléments de fermeture (4) placé sur un support (20) et le raccordement du tuyau souple (3.1) au corps de fermeture (5) s'effectue ensuite.
